(19) **Europäisches Patentamt**

**European Patent Office**

**Office européen des brevets**

(11) Veröffentlichungsnummer: **0 196 562 B1**

# EUROPÄISCHE PATENTSCHRIFT

(45) Veröffentlichungstag der Patentschrift:
12.09.90

(51) Int. Cl.⁵: **G05D 23/24, A61H 33/06**

(21) Anmeldenummer: **86103812.3**

(22) Anmeldetag: **20.03.86**

(54) **Regelsystem für eine elektrische Saunaheizung.**

(30) Priorität: **29.03.85 DE 3511434**

(43) Veröffentlichungstag der Anmeldung:
**08.10.86 Patentblatt 86/41**

(45) Bekanntmachung des Hinweises auf die Patenterteilung:
**12.09.90 Patentblatt 90/37**

(84) Benannte Vertragsstaaten:
**AT BE CH DE FR GB IT LI LU NL SE**

(56) Entgegenhaltungen:
**EP-A- 0 119 580
DE-A- 2 529 184
FR-A- 2 465 388
US-A- 3 892 946**

**REGELUNGSTECHNISCHE PRAXIS UND
PROZESS-RECHENTECHNIK, Band 14, Heft 2,
April 1972, Seiten 56-59, München, DE; W. DETMANN et
al.: "Halbleiter-Wechselstromstellglieder für
Temperaturregelungen"**

(73) Patentinhaber: **Wella Aktiengesellschaft, Berliner
Allee 65, D-6100 Darmstadt(DE)**

(72) Erfinder: **Mattinger, Detlef,
Athanasius-Kircher-Strasse 6, D-6418 Hünfeld(DE)**
Erfinder: **Rutsch, Helmut, Königstrasse 15,
D-6400 Fulda(DE)**
Erfinder: **Trott, Adolf, Schulstrasse 27,
D-6419 Nüsttal 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einem aus FR-A 2 465 388 bekannten elektrischen Heizungsverfahren nach der Gattung des Hauptanspruchs.

Zur Konstanthaltung der Temperatur in einer Sauna ist es bekannt, die Stromzufuhr eines Saunaofens mit Hilfe eines Zweipunktreglers zu regeln. Wegen der großen Heizleistung von 3 kW bis 12 kW werden Saunaöfen üblicherweise an das Drehstromnetz angeschlossen. Um bei diesen hohen Schaltleistungen die im Steuergerät auftretende Verlustleistung gering zu halten, werden ausschließlich elektromagnetische Schalter eingesetzt. Aus Sicherheitsgründen werden zwei unabhängige, in Reihe liegende Schütze mit mindestens 3 mm Kontaktabstand vorgeschrieben. Bei bekannten Steuerungen (beispielsweise aus DE-A1-2529 184) wird eines davon als Sicherheitsschütz und das andere als Regelschütz verwendet.

Sollte einmal durch irgendeinen Fehler im Regelsystem oder durch verschweißte Kontakte des Regelschützes keine Abschaltung des Stroms bei der oberen Temperaturgrenze des Regelsystems erfolgen, so wird - ausgelöst von einer in der Saunakabine befindlichen Temperatur-Schmelzsicherung mit einer Auslösetemperatur von max. 140 °C - das Sicherheitsschütz abfallen und die Stromzuführung unterbrechen. Bei den bekannten Regelsystemen führt eine kleine Schalthysterese (der Unterschied zwischen der oberen und der unteren Temperaturgrenze) zu einem häufigen Schalten des Schützes, was sich auf die Lebensdauer des Schützes und des Saunaofens negativ auswirkt.

Wird jedoch eine große Hysterese gewählt, um eine geringe Schaltzahl des Regelschützes pro Zeitintervall zu erreichen, so werden die Regelschwankungen um so größer und können sich nachteilig auf das Wohlbefinden der Benutzer der Sauna auswirken.

Weitere Versuche, die Temperaturregelung einer Sauna zu verbessern, sind durch US-A-3,892,946 bekannt geworden. Dabei wird nach Erreichen einer ersten Temperaturgrenze die Heizleistung verringert. Dazu ist entweder der Ofen mit zwei Heizwicklungen pro Phase versehen oder die drei Phasen können nacheinander temperaturabhängig zu- bzw. abgeschaltet werden. Bei der erstgenannten Möglichkeit ist der Ofen relativ aufwendig. Bei der zweitgenannten Möglichkeit sind besondere Temperatur-Regler vorgesehen, bei denen ein Temperaturfühler über eine Kapillarleitung mit einem Mehrfachschalter verbunden ist, dessen Kontakte bei verschiedenen Temperaturen betätigt werden. Dieses erfordert eine aufwendige und auch störanfällige spezielle Konstruktion des Temperatur-Reglers.

Aufgabe der vorliegenden Erfindung ist es daher ein Regelsystem für einen Saunaofen anzugeben, bei welchem eine möglichst genaue Regelung der Temperatur möglich ist, welches zuverlässig über eine längere Lebensdauer arbeitet und mit möglichst geringem technischen Aufwand und geringen Kosten zu verwirklichen ist und welches die Gesamtlebensdauer der Relaiskontakte erheblich verlängert.

Das erfindungsgemäße Regelsystem mit den kennzeichnenden Merkmalen des Hauptanspruchs hat demgegenüber den Vorteil, daß bei sehr genauer Regelung der Saunatemperatur die Zahl der Schaltungen pro Zeiteinheit durch gleichmäßige Relaiskontaktbelastung sehr gering ist.

Als weiterer Vorteil ist anzusehen, daß die Schaltgeräusche nicht so häufig wie bei den bekannten Regelsystemen auftreten.

Durch die in den Unteransprüchen aufgeführten Maßnahmen sind vorteilhafte Weiterbildungen und Verbesserungen des im Hauptanspruch angegebenen Regelsystems möglich.

Ein Ausführungsbeispiel der Erfindung ist in der Zeichnung an Hand mehrerer Figuren dargestellt und in der nachfolgenden Beschreibung näher erläutert. Es zeigen:

Fig. 1 ein bekanntes Regelsystem,

Fig. 2 Diagramme zur Erläuterung des bekannten Regelsystems,

Fig. 3 schematisch ein erfindungsgemäßes Regelsystem,

Fig. 4 Diagramme zur Erläuterung des erfindungsgemäßen Regelsystems,

Fig. 5 weitere Diagramme zur Erläuterung des erfindungsgemäßen Regelsystems,

Fig. 6 Diagramme zur Erläuterung einer Weiterbildung der Erfindung und

Fig. 7 Diagramme zur Erläuterung einer Weiterbildung der Erfindung mit PI-Regelverhalten.

Gleiche Teile sind in den Figuren mit gleichen Bezugszeichen versehen.

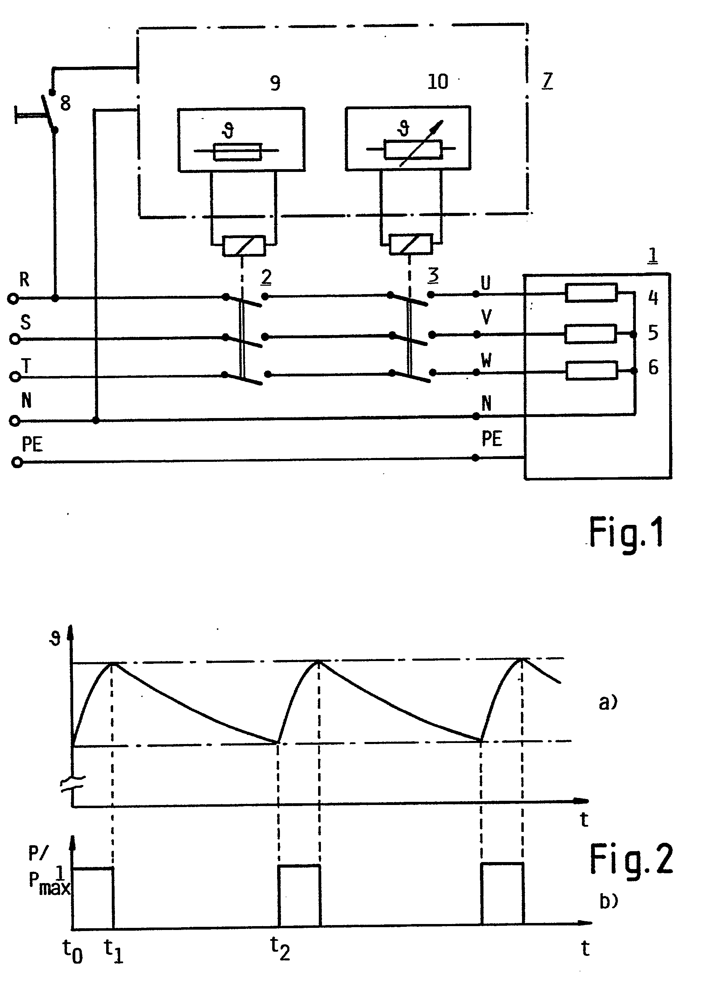

Bei dem bekannten Regelsystem nach Fig. 1 wird der Ofen 1 über die Schütze 2 und 3 an das Drehstromnetz angeschlossen. Dazu sind die Anschlüsse U, V, W, der in Sternschaltung oder eine nicht dargestellte Dreieckschaltung geschalteten Heizwiderstände 4, 5, 6 über je einen Schaltkontakt des Schützes 3 und je einen Schaltkontakt des Schützes 2 mit den Phasen R, S, T des Drehstromnetzes verbunden, während der gemeinsame Anschluß der Heizwiderstände 4, 5, 6 an den Nulleiter N des Drehstromnetzes angeschlossen ist. Außerdem ist der Ofen 1 mit dem Schutzleiter PE verbunden.

Eine Steuerschaltung 7 wird von der Phase R über den Schalter 8 mit Spannung versorgt. Das Sicherheitsschütz 2 wird von einer Temperatursicherung gesteuert, deren Ansprechtemperatur oberhalb der oberen Temperaturgrenze des Regelsystems, jedoch unterhalb einer höchstzulässigen Temperatur liegt.

Das Schütz 3 bildet zusammen mit dem Temperatursensor 10 einen Zweipunktregler, durch den der Ofen mit dem Drehstromnetz solange verbunden bleibt, bis eine obere Temperaturgrenze erreicht ist. Das Schütz 3 schaltet den Ofen 1 dann ab, worauf sich die Temperatur der Sauna absenkt. Bei einer unteren Temperaturgrenze schaltet das Schütz 3 den Ofen 1 wieder ein, worauf die Temperatur innerhalb der Sauna wieder bis zur oberen Temperaturgrenze ansteigt. Diese Vorgänge sind in Fig. 2 als Diagramm dargestellt. Zeile a) der Fig. 2 zeigt die Temperatur in Abhängigkeit der Zeit, während in Zeile b) die normierte Heizleistung P/$P_{max}$ ebenfalls in Abhängigkeit von der Zeit dargestellt ist. Die obere Temperaturgrenze liegt bei dem dargestellten Beispiel etwa 4K über der unteren. Während des Zeitabschnitts $t_0$ bis $t_1$ ist der Ofen eingeschaltet und die Temperatur ändert sich nach einer Exponentialfunktion von der unteren Temperaturgrenze bis zur oberen. Bei der Darstellung in Fig. 2 ist der Anlauf vom Beginn des Einstellens an nicht dargestellt, sondern lediglich der stationäre Zustand. Nach dem Erreichen der oberen Temperaturgrenze zum Zeitpunkt $t_1$ wird der Ofen abgeschaltet und die Temperatur beginnt zu sinken. Dieses geschieht mit einer größeren Zeitkonstante, da der Wärmeverlust durch die Wände der Sauna wesentlich geringer ist als die Wärmezufuhr durch den Ofen bei voller Heizleistung.

Zum Zeitpunkt $t_2$ ist dann wiederum die untere Temperaturgrenze erreicht und der Ofen wird wieder eingeschaltet. In der Praxis haben sich etwa folgende Werte ergeben: für die Hysterese etwa 4K, ferner 10 Schaltspiele pro Stunde bei einer Einschaltdauer von etwa 20 %.

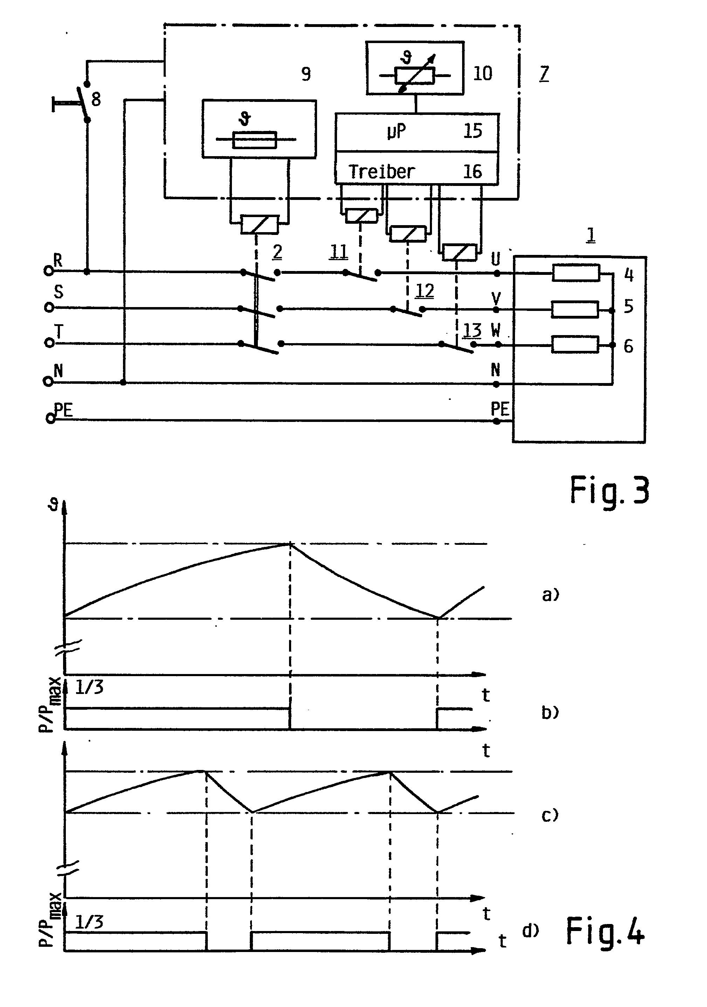

Bei dem in Fig. 3 gezeigten Ausführungsbeispiel entspricht der Ofen, das Sicherheitsschütz 2 und dessen Temperatursicherung 9 im wesentlichen den in Fig. 1 dargestellten Teilen. Anstelle eines Regelschützes bei dem bekannten Regelsystem sind jedoch drei voneinander unabhängig ansteuerbare Relais 11, 12 und 13 vorgesehen. Ein Temperatursensor 14 gibt die Temperaturwerte an einen Mikroprozessor 15, welcher über einen Treiber 16 mit den Spulen der Relais 11, 12, 13 in Verbindung steht. Die Wirkungsweise der Anordnung nach Fig. 3 wird nun mit Hilfe von Fig. 4 erläutert. Während beim Anheizen der Sauna alle Relais 11, 12, 13 angezogen sind, der Ofen also dreiphasig mit dem Netz in Verbindung steht, wird zur Erhaltung der gewünschten Temperatur nur jeweils eines der Relais 11, 12 oder 13 eingeschaltet. Dieses bewirkt, daß der Ofen 1 mit einem Drittel der maximal möglichen Leistung $P_{max}$ betrieben wird, was wiederum zur Folge hat, daß der Temperaturanstieg wesentlich langsamer erfolgt. Dieses ist aus Zeile a) der Fig. 4 ersichtlich. Die Zeitspanne zwischen $t_0$ und $t_1$ ist wesentlich größer als bei dem bekannten Regelsystem und die während dieser Zeit aufgenommene Leistung beträgt 1/3 der maximalen Leistung $P_{max}$. Bei den in den Zeilen a) und b) der Fig. 4 dargestellten Vorgängen wird eine Hysterese vorausgesetzt, welche der im Zusammenhang mit dem bekannten Regelsystem genannten Hysterese von 4K entspricht. Die Temperaturschwankungen entsprechen daher denjenigen beim bekannten Regelsystem, es ergeben sich jedoch weniger als die Hälfte der Schaltspiele pro Stunde als bei dem bekannten Regelsystem.

Den durch die Verringerung der Leistung erzielten Vorteil kann man jedoch auch zur genaueren Temperatureinhaltung nutzen. Bei der Darstellung in den Zeilen c) und d) der Fig. 4 wird von einer Hysterese von 1,8K ausgegangen. Diese Temperaturspanne wird naturgemäß in einer kürzeren Zeit durchfahren, so daß die Zahl der Schaltspiele pro Stunde größer wird. Ein Vergleich mit der Darstellung zum Stand der Technik (Fig. 2) zeigt jedoch, daß in diesem Fall die Zahl der Schaltspiele nicht größer ist als bei dem bekannten Regelsystem.

Bei einer Zweipunktregelung werden die Ein- und Ausschaltzeitpunkte dadurch bestimmt, wann die Ist-Temperatur die Temperaturgrenzen erreicht. Ein weiteres Regelverfahren, bei welchem man mit Schaltern regelt, die lediglich zwei Zustände - nämlich "ein" und "aus" kennen, ist die zeitproportionale Regelung. Hierbei wird die Ist-Temperatur innerhalb eines Temperaturbereichs, welcher mit der Hysterese des Zweipunktreglers vergleichbar ist, in eine Einschaltdauer umgewandelt. Dieses geschieht im allgemeinen dadurch, daß eine der Temperatur proportionale Spannung mit einer dreieckförmig verlaufenden Spannung verglichen wird.

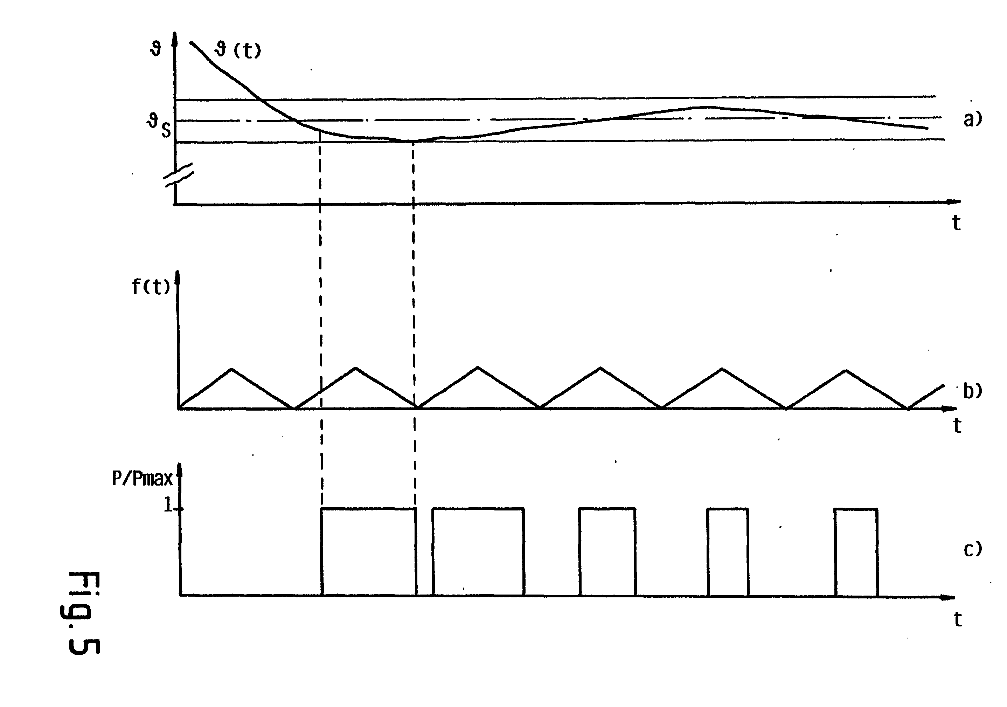

Zur Erläuterung dieser Vorgänge ist in Fig. 5, Zeile a) der Verlauf der Ist-Temperatur sowie die Grenzen des sogenannten Proportionalbandes dargestellt. Zeile b) zeigt den dreieckförmigen Vergleichswert f(t). Die Heizung wird nun eingeschaltet, wenn die Differenz zwischen der Ist-Temperatur und der unteren Grenze des Proportionalbandes kleiner als der Vergleichswert f(t) ist. Dieses geschieht beispielsweise in den in Fig. 5 gestrichelt dargestellten Zeitpunkten, so daß der in Zeile c) gezeigte Verlauf der Leistungsaufnahme P entsteht. Je höher die Ist-Temperatur innerhalb des Proportionalbandes ist, je kürzer sind die Einschaltzeiten, während bei niedrigeren Temperaturen die Einschaltzeiten länger sind.

Oberhalb des Proportionalbandes wird die Heizung solange nicht eingeschaltet bis die Ist-Temperatur wieder in das Proportionalband gerät. Sinngemäß ist die Heizung dauernd eingeschaltet, wenn die Ist-Temperatur unterhalb des Proportionalbandes liegt.

Bei analog arbeitenden Regelsystemen liegt der Vergleichswert f(t) üblicherweise als dreieck- oder sägezahnförmige Spannung vor, während der Ist-Wert der Temperatur in eine ihm proportionale Spannung umgewandelt wird. Beide Spannungen werden dann in einem Komparator verglichen.

Bei der praktischen Ausführung der Erfindung hat sich der Einsatz eines Mikroprozessors gut bewährt. Hierbei wird der Ist-Wert der Temperatur in numerische Werte umgewandelt, während der Vergleichswert als numerischer Wert vorgegeben wird; beide werden dann mit Hilfe von Rechenoperationen verglichen.

Bei der zeitproportionalen Regelung ist zwar die Zahl der Schaltspiele pro Zeiteinheit nicht unmittelbar von der Änderungsgeschwindigkeit der Ist-Temperatur abhängig, sondern hängt mit der Frequenz der Vergleichsspannung zusammen. Bei der Festlegung dieser Frequenz ist jedoch zu berücksichtigen, daß die sogenannte Totzeit des Regelsystems nicht größer ist, als ein durch die Änderungsgeschwindigkeit der Ist-Temperatur und die Hysterese gegebener Wert. Dadurch gelten für die Verhältnisse zwischen der Zahl der Schaltspiele pro Zeiteinheit, der Hysterese und der Änderungsgeschwindigkeit der Ist-Temperatur ähnliche Zusammenhänge wie bei der Zweipunktregelung. Somit wird auch bei der zeitproportionalen Regelung durch eine Verminderung der Heizleistung des Ofens 1 eine Verringerung der Zahl der Schaltspiele pro Zeiteinheit erzielt.

Die Relais 11, 12, 13 werden zyklisch vertauscht angesteuert. Hierdurch wird außer der eingangs erwähnten Verbesserung der Temperaturregelung eine gleichmäßige Temperaturverteilung innerhalb des Ofens erreicht, sowie ein gleichmäßiger Relaiskontaktverschleiß, wodurch die Gesamtlebensdauer der Relaiskontakte erheblich verlängert wird.

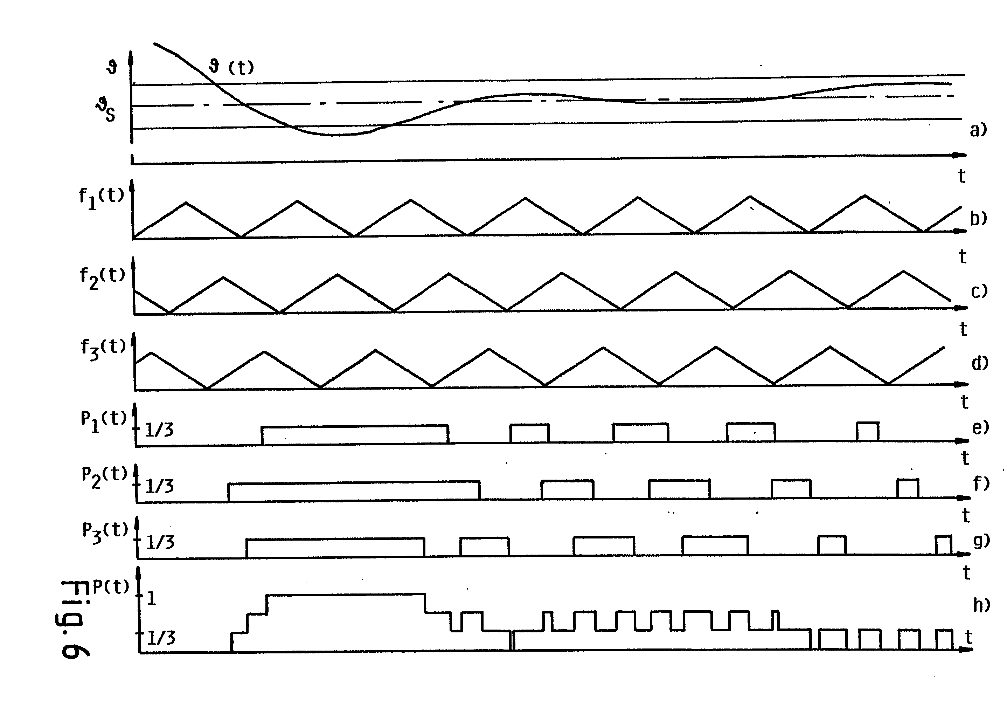

Durch eine entsprechende Ausbildung der Steuerschaltung wird bei dieser Weiterbildung die Ist-Temperatur zur Steuerung der drei Relais 11, 12, 13 mit je einem jeweils um 120° phasenverschobenen dreieckförmig verlaufenden Vergleichswert verglichen. Anstelle des dreieckförmigen kann auch ein sägezahnförmiger Verlauf des Vergleichswertes vorgesehen werden. Diese Vergleichswerte sind in den Zeilen b), c) und d) der Fig. 6 dargestellt. Zeile a) der Fig. 6 zeigt einen angenommenen Verlauf der Ist-Temperatur.

In den Zeilen e), f) und g) sind die Einschaltzeiten der Relais 11, 12, 13 dargestellt. Jedes der Relais ist dann eingeschaltet, wenn die Differenz zwischen der Ist-Temperatur und der unteren Grenze des Proportionalbandes kleiner als der entsprechende Vergleichswert f(t) ist. Entsprechend den in den Zeilen e), f) und g) dargestellten Zeitverläufen wird den einzelnen Heizwiderständen 4, 5, 6 (Fig. 3) elektrische Leistung zugeführt. Die gesamte Leistungsaufnahme ist in Zeile h) der Fig. 6 dargestellt. Aus der Darstellung geht hervor, daß je nach Ablage der Ist-Temperatur vom Sollwert zeitweise die drei Heizwiderstände 4, 5, 6 gleichzeitig ein- oder ausgeschaltet sind oder einzelne Heizwiderstände kurzzeitig eingeschaltet sind. So sind beispielsweise innerhalb des Zeitraumes, während dessen die Ist-Temperatur unterhalb des Proportionalbandes liegt die Heizwiderstände über längere Zeit gleichzeitig eingeschaltet.

Auf diese Weise ergibt sich eine sehr genaue Regelung der Temperatur, ohne daß allzu viele Schaltspiele pro Zeiteinheit erforderlich sind. Außerdem werden die drei Heizwiderstände 4, 5, 6 gleichmäßig belastet.

Das bisher im Zusammenhang mit den Figuren 5 und 6 beschriebene Regelsystem weist ein P-(=Proportional-)Verhalten auf, das bekanntlich ständig eine Regelabweichung zur Folge hat.

Das erfindungsgemäße Regelsystem kann jedoch durch die Anwendung eines PI-Reglers weiter verbessert werden. Insbesondere kann sich ein durch einen Mikroprozessor kontrollierter PI-Regler über eine sehr große Bandbreite selbst an den jeweiligen Betriebszustand adaptieren. Dadurch wird eine optimale Anpassung an verschiedene Saunatypen hinsichtlich Führungs- und Störgrößenverhalten erreicht.

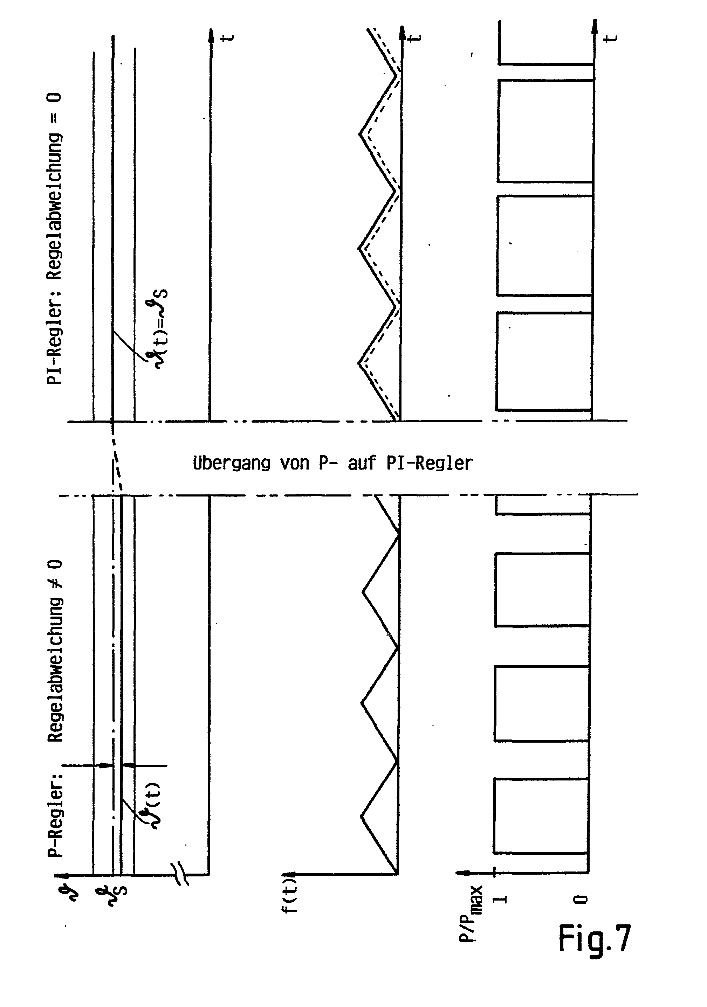

Fig. 7 zeigt das Nachführen von f (t) durch den I-Anteil innerhalb des Proportionalbandes für $\vartheta_S - \vartheta(t) > 0$. Die Umkehrung für $\vartheta_S - \vartheta(t)$ basiert auf dem gleichen Prinzip. Das Nachführen über den I-Anteil erfolgt sinnvoll nur im Bereich des Proportionalbandes.

Eine besonders günstige Regelung ergibt sich, wenn in der Sauna zwei Temperaturfühler vorgesehen sind, von denen ein erster in der Nähe des Ofens und ein zweiter im Bereich der Liegeflächen angeordnet ist. Vom ersten Fühler wird vorzugsweise der P-Anteil, vom zweiten Fühler der I-Anteil abgeleitet.

Bezugszeichenliste

1 Ofen
2 Schütz
3 Schütz
4 Heizwiderstand
5 Heizwiderstand
6 Heizwiderstand
7 Steuerschaltung
8 Schalter
9 Temperatursicherung
10 Temperatursensor
11 Relais
12 Relais
13 Relais
14 Temperatursensor
15 Mikroprozessor
16 Treiber

**Patentansprüche**

1. Verfahren zur Steuerung der Drehstromleistung einer temperaturgeregelten elektrischen Saunaheizung (1) in Abhängigkeit von einer Soll-/-Isttemperaturdifferenz eines Saunaraumes mittels dreier jeweils eine Phase (U, V, W) schaltender steuerbarer Relais (11, 12, 13), die während einer ersten Verfahrensstufe beim erstmaligen Anheizen zur Erzielung der vollen Heizleistung alle angesteuert sind und nach erstmaligem Erreichen der Solltemperatur während einer zweiten Verfahrensstufe zur Aufrechterhaltung des Solltemperaturwerts jedoch nur ein oder zwei der Relais (11, 12, 13) angesteuert sind, dadurch gekennzeichnet, daß während der zweiten Verfahrensstufe zur Aufrechterhaltung des Solltemperaturwerts jeweils ein oder zwei Relais (11, 12, 13) in zyklischer Folge angesteuert sind.

2. Verfahren nach Anspruch 1, dadurch gekennzeichnet, daß zur Temperaturregelung eine der Ist-Temperatur entsprechende elektrische Größe in zyklischer Folge jeweils für die Ansteuerung eines der drei Relais (11, 12, 13) mit einem vorgegebenen Vergleichswert verglichen wird.

3. Verfahren nach Anspruch 2, dadurch gekennzeichnet, daß der Vergleichswert nach einer periodischen Zeitfunktion Werte innerhalb eines Bereichs einnimmt, der den dem Sollwert der Temperatur entsprechenden Wert einschließt.

4. Verfahren nach Anspruch 3, dadurch gekennzeichnet, daß der Vergleichswert dreieck- oder sägezahnförmig verläuft, wobei die Vergleichswerte für die drei Relais (11, 12, 13) jeweils um 120 Grad phasenverschoben sind.

5. Verfahren nach einem der vorangehenden Ansprüche, dadurch gekennzeichnet, daß als Temperaturregler ein P-Regler vorgesehen ist.

6. Verfahren nach einem der Ansprüche 1 bis 4, dadurch gekennzeichnet, daß als Temperaturregler ein PI-Regler vorgesehen ist.

7. Verfahren nach Anspruch 6, dadurch gekennzeichnet, daß in dem Saunaraum ein erster Temperatursensor in der Nähe des Ofens und ein zweiter Temperatursensor im Bereich der Liegeflächen angeordnet ist und daß der erste Temperatursensor zum P-Anteil und der zweite Temperatursensor zum I-Anteil des PI-Reglers beiträgt.

8. Verfahren nach einem der vorangehenden Ansprüche, gekennzeichnet durch die Verwendung eines Mikroprozessors als Temperaturregler.

**Claims**

1. Method for regulating the three-phase current output of a temperature-controlled electrical sauna heating device (1), in dependency upon a nominal/actual temperature difference of a sauna room, by means of three regulatable relays (11, 12, 13), whereof each one switches a phase (U, V, W) and all of which, during a first method stage, are triggered at the first time of heating-up, in order to achieve the full heat output, and after reaching the nominal temperature for the first time, during a second method stage, however, only one or two of the relays (11, 12, 13) are triggered, for maintaining the nominal temperature value, characterised in that during the second method stage, for maintaining the nominal temperature value, in each case one or two relays (11, 12, 13) are triggered in cyclic sequence.

2. Method according to claim 1, characterised in that for the temperature regulation, an electrical value which corresponds to the actual temperature, in cyclic sequence, is compared to a predetermined comparative value, in each case, for the triggering of one of the three relays (11, 12, 13).

3. Method according to claim 2, characterised in that the comparative value, according to a periodic time function, assumes values within a range which includes the value which corresponds to the nominal value of the temperature.

4. Method according to claim 3, characterised in that the comparative value proceeds in a triangular or saw-tooth shape, the comparative values for the three relays (11, 12, 13) being in each case phase-displaced by 120 degrees.

5. Method according to any one of the preceding claims, characterised in that a P (proportional) controller is provided as the temperature regulating means.

6. Method according to any one of the claims 1 to 4, characterised in that a PI (proportional-integral) controller is provided as the temperature regulating means.

7. Method according to claim 6, characterised in that in the sauna room, a first temperature sensor is arranged in the vicinity of the stove, and a second temperature sensor is arranged in the region of the reclining-surfaces, and that the first temperature sensor contributes to the P-portion and the second temperature sensor contributes to the I-portion of the PI controller.

8. Method according to any one of the preceding claims, characterised by the use of a microprocessor as the temperature regulator.

**Revendications**

1. Procédé de commande de la puissance de courant triphasé d'un chauffage électrique d'un sauna (1) à température régulée en fonction d'une différence entre une température instantanée et une température de consigne d'une cabine de sauna au moyen de trois relais (11, 12, 13) enclenchables connectant chacun une phase (U, V, W) qui pendant une première étape de processus lors du chauffage initial sont tous actionnés pour obtenir la puissance de chauffage totale, et après la première obtention de la température de consigne pendant une seconde étape de processus seulement un ou deux relais sont actionnés pour le maintien de la température de consigne, caractérisé en ce que pendant la deuxième étape de processus pour le maintien des valeurs de la température de consigne, un ou deux des relais (11, 12, 13) sont actionnés à la fois de façon cyclique.

2. Procédé selon la revendication 1, caractérisé en ce que pour la régulation de la température une grandeur électrique correspondant à la température instantanée est pour la commande de l'un des trois relais (11, 12, 13), comparée de façon cyclique à une valeur de comparaison prédéterminée.

3. Procédé selon la revendication 2, caractérisé en ce que la valeur de comparaison après une fonction de temps périodique prend des valeurs comprises dans une plage qui englobe la valeur correspondant à la valeur de consigne de la température.

4. Procédé selon la revendication 3, caractérisé en ce que la valeur de comparaison présente un tracé en forme de triangle ou en dents de scie, les valeurs de comparaison pour les trois relais (11, 12, 13) ayant un décalage de phase de 120° les unes par rapport aux autres.

5. Procédé selon l'une des revendications précédentes, caractérisé en ce qu'on prévoit comme régulateur de température un régulateur P.

6. Procédé selon l'une des revendications 1 à 4, caractérisé en ce qu'on prévoit comme régulateur de température un régulateur PI.

7. Procédé selon la revendication 6, caractérisé en ce que dans la cabine de sauna, on place un premier capteur de température au voisinage de l'étuve et un second capteur de température dans la zone des couchettes, et en ce que le premier capteur de température agit pour la partie P et le second capteur pour la partie I du régulateur PI.

8. Procédé selon l'une des revendications précédentes, caractérisé par l'utilisation d'un microprocesseur comme régulateur de température.

**Fig.1**

**Fig.2**

a)

b)

Fig. 3

a)

b)

c)

d) Fig. 4

Fig. 5

Fig. 6

EP 0 196 562 B1

EP 0 196 562 B1

P-Regler: Regelabweichung ≠ 0

PI-Regler: Regelabweichung = 0

$\vartheta$

$\vartheta_S$

$\vartheta(t)$

$\vartheta(t) = \vartheta_S$

t

f(t)

t

übergang von P- auf PI-Regler

$P/P_{max}$

1

0

t

Fig.7